(19) Europäisches Patentamt
European Patent Office
Office européen des brevets

(11) Publication number: **0 328 975 B1**

(12) **EUROPEAN PATENT SPECIFICATION**

(45) Date of publication of patent specification: **08.06.94** (51) Int. Cl.5: **C08F 12/08**, B01J 19/20

(21) Application number: **89101976.2**

(22) Date of filing: **04.02.89**

(54) **Process for producing styrene-based polymers and apparatus for producing said polymers.**

(30) Priority: **13.02.88 JP 30049/88**
**12.09.88 JP 226357/88**
**12.09.88 JP 226358/88**
**12.09.88 JP 226359/88**

(43) Date of publication of application:
**23.08.89 Bulletin 89/34**

(45) Publication of the grant of the patent:
**08.06.94 Bulletin 94/23**

(84) Designated Contracting States:
**AT BE CH DE ES FR GB IT LI NL SE**

(56) References cited:
**EP-A- 0 224 097**
**GB-A- 1 368 446**

(73) Proprietor: **IDEMITSU PETROCHEMICAL CO. LTD.**
**1-1, Marunouchi 3-chome**
**Chiyoda-ku**
**Tokyo 100(JP)**

(72) Inventor: **Shirota, Daigo**
**c/o Idemitsu Petrochem. Co. Ltd.**
**1-1,Anesakikaigen**
**Ichihara-shi Chiba-ken(JP)**
Inventor: **Ishikawa, Kazutoshi**
**c/o Idemitsu Petrochem. Co. Ltd.**
**1-1,Anesakikaigen**
**Ichihara-shi Chiba-ken(JP)**
Inventor: **Yamamoto, Koji**
**c/o Idemitsu Petrochem. Co. Ltd**
**1-1, Anesakikaigen**
**Ichihara-shi Chiba-ken(JP)**
Inventor: **Imabayashi, Hideki**
**c/o Idemitsu Petrochem. Co. Ltd.**
**1-1,Anesakikaigen**
**Ichihara-shi Chiba-ken(JP)**
Inventor: **Izumi, Takashi**
**c/o Idemitsu Petrochem.**
**Co, Ldt.**
**1-1,Anesakikaigen**
**Ichihara-shi Chiba-ken(JP)**

(74) Representative: **Türk, Gille, Hrabal, Leifert**
**Brucknerstrasse 20**
**D-40593 Düsseldorf (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 328 975 B1

## Description

### BACKGROUND OF THE INVENTION

#### 1. Field of the invention

The present invention relates to a process for producing styrene-based polymers. More partidularly the present invention relates to a process for producing, efficiently, styrene-based polymers having a stereo-structure in which chains are mainly in syndiotactic configuration.

#### 2. Description of the Related Arts

Conventionally, styrene-based polymers which are atactic or isotactic are well known, but recently styrene-based polymers having a stereostructure of mainly syndiotactic configuration have been developed, one of which, for example, is disclosed in JP-A-187 708/1987.

One problem encountered in the production of styrene-based polymers having syndiotactic configuration, is that the reaction mixture solidifies when the reaction is only approximately 20% complete while the polymerization reaction continues until a conversion ratio of approximately 70% is accomplished.

Accordingly, if the polymerization reaction is effected in a reactor provided with agitating blades having conventional paddle blades, macro-particles with diameters of approximately 5 mm or more are produced when styrene-based polymers having a syndiotactic configuration are precipitated from the base liquid, and such particles have the disadvantage of lowering the drying efficiency. In addition, in that part of the reactor where the shearing force of the agitating device cannot reach, these particles solidify into cakes, so that at the completion of polymerization reaction, polymer pieces remain adhered to the inner wall of the reactor, agitating blades, and objects such as thermocouples which project into the reactor.

### SUMMARY OF THE INVENTION

An object of the present invention is to produce, efficiently, styrene-based polymers having a mainly syndiotactic configuration wherein the particle size of the resulting polymers is controllable so that the post-treatment of the polymers is easier and wherein the polymers formed during the polymerization reaction are prevented from adhering to the inside of the reactor.

This object according to present invention can be achieved by a process for producing styrene-based polymers having a mainly syndiotactic configuration, which comprises bulk polymerizing styrene monomer or styrene derivative monomer at a temperature of not higher than 150 °C, preferably 0 to 120 °C, more preferably 10 to 90 °C, while adding a sufficient shearing force to the reaction mixture to keep the reaction mixture in a polydispersive state so as to make a substantially solid-state polydispersoid of the polymer.

According to the present invention, it is possible to obtain, efficiently, styrene-based polymers having mainly syndiotactic configuration in powder form with uniform particle size without adhesion of polymers during the polymerization reaction. Controlling the shearing force by agitating-blades also enables controlling particle size of the polymers, to make the post-treatment easier. That is, the formation of macro particles is avoided.

Consequently, the present invention is of particular commercial usefulness and can be utilized effectively as a process for industrial preparation of styrene-based polymers having mainly syndiotactic configuration.

Acccording to further preferred embodiments of the present invention a shearing force of at least 0,005 kilowatt per liter of monomer, preferably of 0,01 to 1 kilowatt per liter of monomer is applied.

According to a further preferred embodiment the process of the present invention is carried out by using a reaction apparatus for applying said shearing force which is provided with agitating mechanism having agitating blades comprising: (a) double helical ribbon blades, (b) planetary-rotating blades, (c) rotary blades on one axis, or (d) rotary blades on two axis.

The process of the present invention according to further preferred embodiments is carried out by using reaction apparatus having one of the following constructions (1) to (4):

(1) a cylinder-like or cylindrical reactor provided with agitating blades having two or more flat paddles fixed with their wider face in vertical direction or flat paddles fixed at certain angles in the said reactor, and scrapers attached on the ends of the beforementioned paddles placed higher than 1/4 of the axial length of the reactor from the bottom, and said scrapers are attached with their ends spaced from the inner wall of the reactor by not more than 10 mm, and each scraper is set in a shifted phase of rotation

with vertically adjacent ones.

(2) a cylinder-like or cylindrical reactor provided with rotatable agitating blades having two or more round rod paddles provided in the higher part of the said reactor, and two or more tilt flat paddles provided in the lower part of the reactor, and scrapers, in particular round rod scrapers, attached to the beforementioned paddles, in particular at their ends, which scrapers are placed on paddles positioned higher than 1/4 of the axial length of the reactor from its bottom, and said scrapers are attached with their ends spaced by not more than 10 mm from the inner wall of the reactor, and each scraper is set in a shifted phase of rotation with vertically adjacent scrapers;

(3) a cylinder-like or cylindrical reactor provided with agitating blades having helical blades rotatably fitted in said reactor, and scrapers attached on the ends of the said helical blades placed higher than 1/4 of the axial length of the reactor from its bottom, and said scrapers are set with their ends spaced by not more than 10 mm from the inner wall of the reactor; and

(4) a cylinder-like or cylindrical reactor provided with lower agitating-blades consisting of paddle blades or anchor blades, which rotatably fitted at the lower part of said reactor, and at least two agitating rods extending in vertical direction provided above the said lower agitating-blades and at different distances from the axis of rotation.

## BRIEF DESCRIPTION OF DRAWINGS

| | |
|---|---|
| Fig.1 | illustrates a reactor which can be used in the claimed process and which is provided with double helical ribbon blades; |
| Fig. 2 | illustrates another usable reactor provided with agitating blades of planetary-rotating type; |
| Fig. 3 | illustrates a further usable reactor provided with rotary blades on one axis; |
| Fig. 4 | illustrates a usable reactor provided with rotary blades on two axis; |
| Fig. 5 | is a cross-sectional view of a usable reactor provided with paddle blades having scrapers on their ends; |
| Figs. 6(A) and (B) | illustrate other examples of paddle blades having scrapers on their end; |
| Fig. 7 | illustrates the state where scrapers on paddle ends are aligned in a vertical direction; |
| Fig. 8 | illustrates a usable reactor provided with agitating blades having round rod scraper on their ends; |
| Fig. 9 | shows the cross-section of a usable reactor provided with helical blades having scrapers on their ends; |
| Fig. 10 | shows the cross-section of a usable reactor provided with agitating blades consisting of agitating rods; |
| Fig. 11(A) to 11(D) | show cross-sections each illustrating other forms of agitating blades consisting of agitating rods; and |
| Fig. 12 | shows the cross-section of a reactor, showing a further form of agitating blades consisting of agitating rods. |

## DESCRIPTION OF PREFERRED EMBODIMENTS

The polymer produced in accordance with the present invention is styrene-based resin having mainly syndiotactic configuration. A syndiotactic configuration means a stereostructure in which the side chain phenyl groups of substituted phenyl groups are located alternately in opposite directions relative to the main chain composed of carbon-carbon bonds. The tacticity is quantitatively determined by the nuclear magnetic resonance method using a carbon isotope ($^{13}$C-NMR method). The tacticity as determined by the $^{13}$C-NMR method is indicated in terms of proportions of structural units continuously connected to each other, i.e., a diad in which two structural units are connected to each other, a triad in which three structural units are connected to each other, and a pentad in which five structural units are connected to each other. Styrene-based resins having mainly the syndiotactic configuration of the present invention include polystyrene, poly(alkylstyrene), poly(halogenated styrene), poly(alkoxystyrene), polyvinyl benzoate and mixtures thereof, and copolymers containing the above polymer units as the main component and each having syndiotacticity such that the proportion of a diad is at least 75% and preferably at least 85%, or the proportion of a pentad (racemic pentad) is at least 30% and preferably at least 50%.

The above poly(alkylstyrene) includes e.g. polymethylstyrene, polyethylstyrene, polyisopropylstyrene, and poly(tert-butylstyrene). The poly(halogenated styrene) includes e.g. polychlorostyrene, polybromostyrene, and polyfluorostyrene. The poly(alkoxystyrene) includes e.g. polymethoxystyrene, and polyethoxystyrene. Of these styrene-based resins, polystyrene, poly(p-methylstyrene), poly(m-methylstyrene), poly(p-tert-butylstyrene), poly(p-chlorostyrene), poly(m-chlorostyrene), poly(p-fluorostyrene), and a copolymer of styrene and p-methylstyrene are most preferable.

The styrene-based resin prepared according to the present invention has a weight average molecular weight of at least 5,000, preferably 10,000 to 20,000,000 and a number average molecular weight of at least 2,500, preferably 5,000 to 10,000,000.

The styrene-based resin having mainly syndiotactic configuration can be obtained, for example, by polymerizing a styrene-based monomer (corresponding to the desired styrene-based resin) by the use of a catalyst comprising a titanium compound and a contact product of condensing agent and organoaluminum compound in the presence or absence of an inert hydrocarbon solvent.

Various titanium compounds can be used. Preferred are the compounds represented by the following general formulae (I) and (II):

General Formula (I):

$TiR^1{}_aR^2{}_bR^3{}_cX^1{}_{4-(a+b+c)}$ (I)

General Formula (II)

$TiR^1{}_dR^2{}_eX^1{}_{3-(d+e)}$ (II)

(wherein $R^1$, $R^2$ and $R^3$ are each a hydrogen atom, an alkyl group having 1 to 20 carbon atoms, an alkoxy group having 1 to 20 carbon atoms, an aryl group having 6 to 20 carbon atoms, an alkylaryl group having 6 to 20 carbon atoms, an arylalkyl group having 6 to 20 carbon atoms, an acyloxy group having 1 to 20 carbon atoms, a cylopentadienyl group, a substituted cyclopentadienyl group having 5 to 20 carbon atoms, or an indenyl group, $X^1$ is a halogen atom, a, b and c are each an integer of 0 to 4, and d and e are each an integer of 0 to 3). That is, as the above titanium compound at least one compound selected from the titanium compounds represented by the general formulae (I) and (II) is preferably used.

In addition, as the titanium compound condensed titanium compounds represented by the general formula (III):

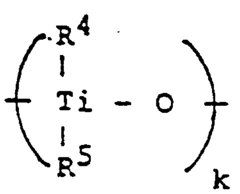

..... (III)

(wherein $R^4$ and $R^5$ are each a halogen atom, an alkoxy group having 1 to 20 carbon atoms, or an acyloxy group having 1 to 20 carbon atoms, and k is a number of 2 to 20) can be used.

These titanium compounds can be used as complexes with, e.g., esters or ethers.

The organoaluminum compound as the other component of the catalyst of the present invention is prepared by contacting an organoaluminum compound and a condensing agent.

As the above organoaluminum compound, compounds represented by the general formula (IV):

$AlR^6{}_3$ (IV)

(wherein $R^6$ is an alkyl group having 1 to 8 carbon atoms) are usually used.

A typical example of the condensing agent is water. In addition, any compounds capable of undergoing a condensation reaction with organoaluminum can be used.

A typical example of the contact product is a reaction product of trialkylaluminum and water. This contact product can be prepared by various methods, e.g., (1) a method in which alkylaluminum is dissolved in an organic solvent and then contacted with water; (2) a method in which alkylaluminum is first added at the time of polymerization, and then water is added; and (3) a method in which alkylaluminum is reacted with water of crystallization as contained in metal salts or water absorbed on inorganic or organic compounds. The above water may contain ammonia, amine such as ethylamine, sulfur compounds such as

hydrogen sulfide, or phosphorous compounds such as phosphorous ester, in the proportion of less than 20%.

The catalyst which can be used in the process of the present invention contains the above titanium compound and the contact product as the main components. If desired, other suitable catalyst components may be added.

The ratio of the titanium compound to the contact product in the catalyst cannot be determined unconditionally because it varies depending on the type of each component, and the type of the styrene monomer starting material.

In the present invention, polymerization reaction is effected by agitating the starting material and catalyst preferably at a temperature lower than the fusing point of polymers, that is, at a temperature of not higher than 150°C, preferably 0 to 120°C, more preferably 10 to 90°C, while adding shearing force enough to maintain a polydispersive state, so as to make a substantially solid-state polydispersoid, and thus styrene-based polymers having syndiotactic configuration are produced.

Herein agitation at polymerization reaction has three stages:

i) agitation in a low viscosity state at polymerization temperature where monomers, oligomers and polymers are in liquid form, a part of polymerized polymers is in slurry form without becoming liquid in monomers, or polymers containing other solvents are substantially in liquid form,

ii) agitation in a high viscosity state with adding shearing force, as polymerization proceeds, and

iii) lastly agitation of solid-states polydispersoid when substantially the whole has become polydispersive.

These three steps of agitations are effected in a single reactor.

Said shearing force, particularly shearing force in a high viscosity state is necessary for solid-states polydispersoid and the desired level of the shearing force to be applied is at least 0.005 kilowatt, preferably 0.01 to 1 kilowatt per liter of styrene monomer as starting material in terms of power consumption. Shearing force is calculated in accordance with the following:

$$\text{Shearing force (kW)} = \frac{P - Po}{M}$$

Po: Amount of electrical energy consumed by revolution of paddles with no material in the reactor

P : Amount of electrical energy consumed when paddles are revolved with starting material (styrene monomer) and polymers in the reactor

M : Initial amount of starting material (styrene monomer) in the reactor (liter)

Examples of the means for adding such a shearing force are (a) reactor C provided with an agitating mechanism of which agitating blades P consist of double helical ribbon blades 1, shown in Fig. 1; (b) reactor C provided with an agitating mechanism of which agitating blades P consist of blades 2 of planetary-rotating type shown in Fig. 2; (c) horizontal reactor C provided with an agitating mechanism having agitating blades P consisting of rotating blades 3 on one axis, shown in Fig. 3; or (d) horizontal reactor C provided with an agitating mechanism having agitating blades P consisting of rotating blades 3,3 on two axis, shown in Fig. 4; and furthermore, reactor 11 (21, 31) provided with agitating blades 13 (23, 33) having scrapers on their ends, shown in Figs. 5,6,8 and 9, and reactor 41 provided with agitating blades having agitating rods, shown in Figs. 10 to 12.

Employment of these kinds of reactors C, and selecting adequate revolution speed or torque of agitating blades P, that is, the output of driving mechanism including motors in the range of agitating power of usually 0.8 to 5,000 kilowatt/$m^3$, enables to control the shearing force at polymerization to desired levels. In this way, it comes to be possible to vary the particle size of the resulting polymers discretionarily, that means, to control the particle size by varying the shearing force at polymerization.

By solid-state polydispersoid there is meant a substance in dispersed state such as powder form or flake form, preferably powders having uniform particle size.

The following description illustrates the examples of apparatus of particularly preferred types to carry out the process of the present invention.

Apparatus 11 shown in Fig. 5 consists of a cylinder-like reactor 12 and agitating blades 13 rotatably fitted in said reactor 12, and said apparatus 11 is generally called reactor of agitating tank type. Said apparatus 11 employs, as said agitating blades 13, agitating blades having two or more flat paddles fixed with their wider face in vertical direction or flat paddles fixed at certain angles to the vertical line (hereinafter simply referred to as paddles) 14, 14, and scrapers 15, 15 are attached on the ends of upper paddles excepting the paddles positioned near the bottom of reactor 12.

Said paddles 14 give a sufficient shearing force to the mixture of said starting material and catalyst and others (hereinafter simply called as starting material), and the shapes including width, locating spaces of upper and lower paddles, or angles of fixing each paddle 14 can be made in the same way as in conventional paddles. For example, the number of stairs of paddles 14 may vary with the axial length of reactor 12 or blade width of paddle 14, but adequate number of stairs in usually 3 to 20. The angle of paddles 14 is not critical, but the angles usually used for this kind of agitating blades, that is, 0 to 45°C to the rotation axis will be adequate.

Scrapers 15 on the ends of said paddles 14 are attached for the purpose of preventing adhesion of scale to inner wall of reactor 12, formed of flat plate or round rod and the surface of them is preferably smooth. Quality of their material may be identical to that used for blades (stainless steel, for instance), or may be Teflon®. When metals are used for scrapers, the surfaces of them are preferably smoothly finished as by buffing. The distances between said scrapers 15 and the inner wall of reactor 12 are preferably not more than 10mm, and more preferably not more than 5 mm, so that any starting material or polymers adhering to the wall is substantially completely scraped off. Each scraper 15 should be located in shifted phase in rotation with adjacent scrapers so that scrapers 15 might not align in vartical direction, for the purpose of preventing the material from co-rotating with rotating blades 13. To shift the phase of scrapers 15, the most appropriate way is by the manner in which the paddle 14 is attached on agitating blades 13. For example, when vertically adjacent paddles 14 make a phase shift of 90°C, as shown in Fig. 5, the object can be attained by attaching scrapers 15 on each end of paddles 14. As shown in Fig. 6 A,B, when paddles 14a, 14a are set in the same phase, the way to attach scrapers 15, 15 on alternate ends of each paddle 14a is to make phase shifts of 180°C. It should be avoided to make scrapers align in vertical direction, as shown in Fig. 7. Similarly, in order to prevent co-rotation of the starting material, it is necessary to avoid attaching scrapers into agitating blades near the bottom, that is, placed lower than 1/4 of the axial length of the reactor from the bottom. If co-rotation is created in starting material, the sufficient shearing force will not be imparted to the starting material, and the object of the present invention cannot be attained.

At the upper end of agitating blades 13, further, upper scrapers 16 which scrape the starting material adhering to the upper inside reactor 12 are attached. To the bottom of reactor 12, usual paddle may be fitted, but instead of them, anchor type paddle 17 fittable for the shape of the bottom of reactor can be employed.

If the ends of the paddles without scrapers 15 among these paddles are spaced by not more than 20 mm, preferably not more than 5 mm from the inner wall of the reactor, sufficient shearing force can be given uniformly to the starting material.

Fig. 8 illustrates another example of agitating blades having paddles similarly to the abovementioned apparatus.

Said apparatus 21 employs as agitating blades 23 rotatably set in cylinder-like reactor 22, blades having two or more round rod paddles 24, 24 placed higher than the middle in said reactor 22 and two or more tilt flat paddles 25, 25 placed lower than the middle in the said reactor 22, and provided with rod shaped scrapers 26, 26 on the ends of upper paddles except the paddles located near the bottom of reactor 22.

As described above, by locating rod paddles 24 higher than the middle of reactor 22 and tilt flat paddles 25 lower than the middle, it becomes possible to reduce the resistance at agitating while giving sufficient shearing force to the starting material, and at the same time, to agitate the starting material sufficiently. The bottom of reactor 22 can be fitted with flat paddles, but instead of them, if anchor-type paddle 27 fittable to the shape of the bottom of reactor is employed, the agitating efficiency can be improved further.

The shapes such as size and width, space in vertical direction, angle of placing each paddle in this reactor can be set appropriately according to the size of reactor 22 or kinds of the starting material, similarly in the above-mentioned apparatus. For example, paddles can be set in 5 to 20 stairs, and tilt flat paddles 25 can be set at the angles of 0 to 45°C to rotation axis, as in the beforementioned apparatus.

On the other hand, if scrapers 26 on the ends of said paddles are in rod shape, adhering of scale and the like to the inner wall of reactor 22 can be prevented, and moreover, the resistance at agitating can be reduced. Said scrapers 26 are preferred to be formed of the material having smooth surface and excellent anti-wearing properties, and to be spaced from the inner wall of reactor 22 by not more than 10 mm, more preferably not more than 5 mm. Said scrapers 26 are required to be placed in shifted phases in rotation with vertically adjacent scrapers so as not to align in vertical direction, for the purpose of preventing the starting material from co-rotating with rotating blades 23.

By spacing the ends of tilt flat paddles 25 lower without scraper 26 attached on their ends from the inner wall of reactor 22 by not more than 20 mm, preferably 5 mm, the starting material can receive

sufficient shearing force uniformly, as in the beforementioned reactor.

Furthermore, if a liquid break 28 is fitted to the inside upper end of cylinder-shape in reactor 22, it can prevent scale from adhering to the upper wall. The boss 29 which connects agitating blades 23 and rotation driving axis should be formed as small as possible, so as to reduce the adhesion of scale to said boss 29.

Fig. 9 illustrates an example of apparatus having helical blades as agitating blades.

Said apparatus 31 employs as agitating blades 33 rotatably fitted in cylinder-like reactor 32, agitating blades having helical blades 34, and scrapers 35 attached on the ends of upper blades excepting the blades positioned near the bottom of reactor 32.

Said helical blades 34 give sufficient shearing force to the said starting material, and shapes including their width, spaces between upper and lower blades, and the angle of fixing said helical blades 34 can be determined similarly to those of the conventional blades. For example, the spiral number of helical blades 34 varies with the axial length of reactor 32, the type of helical blades 34, that is, single or double type, or the blade width, but spiral number is 1 to 10.

Scrapers 35 on the edges of said helical blades 34 are attached for preventing scales from adhering on the inner wall of reactor 32, as mentioned before, and are formed of a material having smooth surface and excellent anti-wearing properties. The distance of said scrapers 35 and the inner wall of reactor 32 is desired to be not more than 10 mm, more preferably not more than 5 mm, so as not to fail in scraping up the starting material adhering to the wall. When the helical blades are two or more, said scrapers 35 on the edge of at least one helical blade can result a satisfactory effect. Said scrapers 35 should not be attached on the helical blades near the bottom, positioned at highest 1/4 of axial length of the reactor up from its bottom, so as to prevent co-rotation of the starting material with rotating blades 33.

Furthermore, if the edges of helical blades without having scrapers 35, among these helical blades, are spaced from the inner wall of reactor 32 by not more than 20 mm, preferably not more than 10 mm, a sufficient shearing force can be given to the starting material.

In the polymerization of styrene by means of said apparatus 31, it is preferred to agitate in the direction of scraping down in order to give sufficient shearing to gel at the initial stage of polymerization while the starting material is in gel state. After the formation of powder is observed, it is preferred to agitate in the direction of scraping up in order to reduce agitating power. That is, depending on the angle of the blades or paddles, the direction of starting can be changed to "push" upwardly or downwardly by means of the blades or paddles, and scrapers.

Fig. 10 illustrates an example of apparatus employing agitating rods for agitating blades. Said apparatus 41 employs as agitating blades 43 rotatably fitted in cylinder-like reactor 42, agitating blades formed of lower agitating-blades 44 consisting of rectangle paddle blade positioning near the bottom of reactor 42 or an anchor blades formed according to the bottom shape of reactor 42, and two agitating rods 45a, 45b or more rods planted in vertical direction on the upper surface of said lower agitating blades 44.

The width (height) of axial direction of abovementioned lower agitating-blades 44 are preferably 1/20 or longer and not longer than 1/2 of the length of rotation axis 43a (approximately same as the depth of reactor 2). If said width is too long, the co-rotation of the starting material will be caused, and if the width is too short, sufficient shearing force cannot be obtained. The lower agitating-blades 44 can be provided with proper inclination to improve the agitating effect. Moreover, the distance between the edge of lower agitating-blades 44 and the inner wall of tank is preferably not more than 20 mm, more preferably not more than 5 mm.

Each of the abovementioned two agitating rods 45a, on the other hand, are located at the different distance from the rotation axis 43a, respectively. One of the agitating rods, 45a is planted with the distance from the inner wall of tank of usually not more than 10 mm, preferably not more than 5 mm, so as to have the function as a scraper to prevent the scale from adhering to the inner wall of reactor 42. Another agitating rod 45b is attached at a position with different distance from the rotation axis 43a from the distance between the abovementioned agitating rod 45a and rotation axis 43a (that means, the distance between agitating rod 45b and the inner wall of the tank should be different from that between agitating rod 45a and the inner wall of the tank.) By attaching at least two agitating rods 45a, 45b having different distances from the rotation axis 43a, the adhesion of scale to the inner wall of the tank can be prevented, and a sufficient shearing force can be given to the starting material. The cross-section in horizontal direction of said agitating rods 45a, 45b may be circle, oval, square, rectangle, triangle, streamline, wedge-shape, or other various shapes.

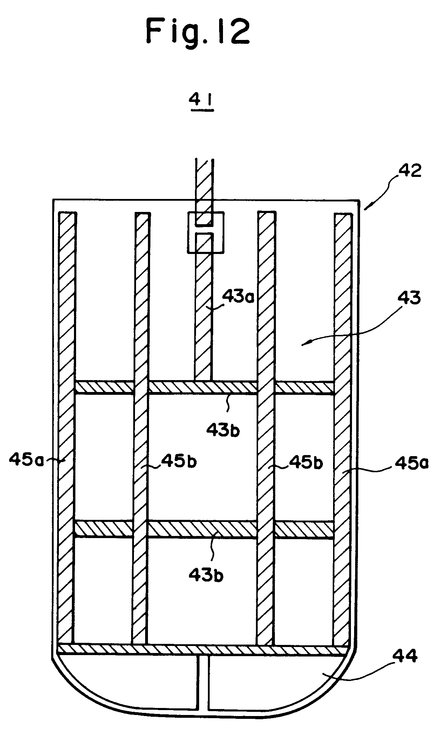

As for agitating rods 45a, 45b, three or more of them can be set, and for instance, attaching four or more as couples is suggested, as shown in Fig. 11 (A), (B), (C), (D) and Fig. 12. When four or more of rods are set in this way, agitating rods 45a and 45b in Fig. 11 (C) may be attached in shifted phase by 90 °C. Connecting rods 43b can be placed appropriately between the agitating rods 45a, 45b and rotation axis 43a,

or between agitating rods 45a, 45b, In that case, rotation axis 43a need not be extended to lower agitating-blade 44 (see Fig. 2 (D)). Furthermore, agitating rods or connecting rods can be set, but they should be within the range in which the starting material might not co-rotate at agitation.

The material of the abovementioned each reactor and agitating blades may be usual ones such as stainless steel and the surface of them are preferred to be made smooth by buff finishing and other means.

The present invention is described in greater detail with reference to the following examples.

EXAMPLE 1

In a 2-liter reactor of tank-shape with a diameter of 130 mm provided with double helical blades having a blade width of 13 mm, and a clearance of 2 mm, 0.5 liter of styrene as the starting material, 22.5 millimol of methylaluminoxane as catalyst and 0.225 millimol of titanium tetraethoxide were placed, and polymerized for two hours at a reaction temperature of 50 ° C, at an agitating speed of 400 rpm.

The shearing force in the said reaction was 0.2 kilowatt in terms of power consumption per liter of styrene monomer as starting material. As the result, 281 g of styrene-based polymer (polystyrene) having syndiotactic configuration in uniform powder (hereinafter referred to as SPS) was obtained (Yield : 62 %).

The syndiotacticity indicated in terms of racemic pentad of said SPS was 95 %. On inspection the inside of the reactor open after completion of reaction, no adhesion of resulting product to the inner wall or blades was found.

EXAMPLE 2

In a reactor having a 5 liter tank with the diameter of 200 mm provided with planetary-rotating blades of blade-shaped ring type and having a clearance of 3 mm, the same starting material and catalyst as in Example 1 were placed and polymerized for two hours at the number of rotation on the center axis of 60 rpm, and at the number of rotation on blades' own axis of 120 rpm.

The shearing force in the said reaction was 0.1 kilowatt in terms of power consumption per liter of styrene monomer as starting material. As a result, 317 g of SPS in uniform powder was obtained (Yield : 70 %). The syndiotacticity in the terms of racemic pentad of said SPS was 96 %, and the weight average diameter was 3.1 mm. After the reaction was completed, the inside of the reactor was inspected, to find no adhesion of resulting product to the inner wall or blades.

EXAMPLE 3

In a horizontal biaxial reactor of actual capacity of 3 liter, with the clearance of 5 mm, the starting material mixed in the same ratio as in Example 1 mentioned before was fed at the rate of 1.5 liter/hour, to perform polymerization reaction continuously for four hours at the rotational speed of 100 rpm.

The shearing force at the reaction was 0.30 kilowatt in terms of power consumption. As the result, uniform powder of SPS was obtained. The syndiotacticity in terms of recemic pentad of said SPS was 94%. No blockage of reactor in the process of reaction was caused. After the reaction was completed, the inside of the reactor was inspected, and no adhesion of resulting product to the inner wall or blades was found.

EXAMPLE 4

The same polymerization as in Example 2 was repeated with the exception that the number of rotation on center axis was 120 rpm, and the number of rotation on blades' own axis was 240 rpm.

The shearing force at the said reaction was 0.15 kilowatt in terms of power consumption per liter of styrene monomer as starting material. As the result, 317 g of SPS in uniform powder was obtained (Yield : 70 %). The syndiotacticity in terms of racemic pentad of said SPS was 96%, and the weight average diameter was 1.2 mm. No resulting product was observed adhered to the inner wall of the reactor or the blades.

COMPARATIVE EXAMPLE 1

The same polymerization as in Example 1 was repeated excepting that the paddle blades (without scrapers) having a blade width of 65 mm and a blade height of 30 mm were employed. As the result, 158 g of SPS was obtained (Yield : 35%). At observing the inside of the tank, a large amount of adhering substance was found on the inner wall centering the vapor-liquid interface, and adhesion was also found on

the blade surface. Furthermore, the resulting polymers contain 31 g of macro-particle of diameter of 5 to 10 mm.

COMPARATIVE EXAMPLE 2

The same polymerization as in Example 1 was repeated excepting that fiddler blades were employed for agitating blades and two sheets of obstacle plates were set. As the result, the amount of SPS resulted was 176 g (Yield: 39%). When the inside of the tank was observed, a lot of scale was found on the inner wall, or the obstacle plate and on the agitation shaft. And the resulting polymer contains 25 g of macro-particle having diameters of 5 to 10 mm.

EXAMPLE 5

A tank-type reactor was used which has a capacity of 10 liters and a diameter of 200 mm, and is provided with agitating blades of multi-paddle type (see Fig. 1) having blade width of 190 mm, paddle width of 25 mm, paddles angle of 30° (to the axial line), 5 stairs of paddles, with the lowest paddle being anchor-type one, axial length of 330 mm, and each paddle was located at 290 mm, 230 mm, 170 mm, 108 mm high from the bottom, and the paddles except the lowest two paddles are attached with scrapers of 60 mm in length (the highest scrapers), 72 mm (the second scraper), and 85 mm (the third scraper), 13 mm in width, 2 mm spaced from the inner wall of the tank on their ends. Into the reactor was introduced 3.0 liters styrene as starting material, 104 millimol of methylaluminoxane as catalyst and 0135 millimol of titanium tetraethoxide, and the mixture polymerized at a reaction temperature of 70°C, and an agitating speed of 400 rpm for two hours. However, agitating was performed in scraping-up directions. As the result, 1700 g of SPS in powder was obtained. The syndiotacticity in terms of racemic pentad of said SPS was 97%. When the inner tank was inspected after the completion of the reaction, scale adhering to the inner wall of the tank or agitating blades was very slight, and the total amount of said scale and particles of larger than 5 mm in the resulting styrene polymer was not more than 10% of the whole amount of the said polymer.

EXAMPLE 6

The same procedure as in Example 5 was repeated excepting that the space between the scrapers and the inner wall of the tank was 5 mm, to obtain 1690 g of SPS. The syndiotacticity in terms of racemic pentad of said SPS was 97%. The total amount of scale and the particles having diameters of 5 mm or more found in resulting polymers was 15% of the whole amount of SPS.

EXAMPLE 7

The same procedure as in Example 5 was repeated excepting that the anchor-type paddle at the lowest was replaced with a usual paddle, to obtain 1680 g of SPS. The syndiotacticity in terms of racemic pentad of said SPS was 97%. The total amount of the scale and the particles of 5 mm or more in diameter was 15% of the whole amount of the resulting SPS.

EXAMPLE 8

The same procedure as in Example 5 excepting that the paddles were fixed with the wider side in vertical direction, to obtain 1720 g of SPS. The syndiotacticity in terms of racemic pentad was 97%. The total amount of the scale and particles of 5 mm in diameter or larger was 15% of the whole SPS resulted.

COMPARATIVE EXAMPLE 3

The same procedure as in Example 7 was repeated excepting that scrapers are attached in an alignment in vertical direction as shown in Fig. 7, to obtain 1700 g of SPS. The sum of the scale and the particles having diameters of 5 mm or more was 55% of the whole amount of SPS resulted.

COMPARATIVE EXAMPLE 4

The same procedure as in Example 5 was repeated excepting that scrapers are not attached and agitating was performed with paddles only, to obtain 1650 g of SPS. The sum of scale and the particles of 5

mm or larger was 70% of the total SPS resulted.

COMPARATIVE EXAMPLE 5

The same procedure as in Example 7 was repeated excepting that agitation was performed with all the paddles as well as anchor paddles attached with scrapers on their ends, to obtain 1700 g of SPS. The sum of scale and particles of 5 mm in diameter or larger was 60% of the total amount of SPS resulted.

EXAMPLE 9

A reactor having a 10 liter tank of 200 mm in diameter, 330 mm in height, and agitating blades of double helical ones of 180 mm in diameter, 25 mm in width, having a pitch of blades of 160 mm (see Fig. 9) with scrapers on their edges except the part of lower than 85 mm from the bottom of one of helical blades, and said scrapers are spaced by 2 mm from the inner wall of the tank was used. Polymerization was run under the same conditions as in Example 5. Agitation was made in the direction of scraping down for the initial one hour in reaction, and then turned to the direction of scraping up. As the result, 1700 g SPS powder was obtained. The syndiotacticity in terms of racemic pentad of said SPS was 97%. After completion of the reaction, the inside of the tank was inspected, to find little scale adhering to the inner wall of tank or agitating blades. The total amount of the scale and particle of 5 mm or more in diameter was not more than 10% of the whole SPS.

EXAMPLE 10

The same procedure as in Example 9 except that the space between the scrapers and the inner wall of tank were 5 mm, to obtain 1680 g of SPS. The syndiotacticity in terms of racemic pentad of said SPS was 97%. The total amount of scale and the particles having diameter of 5 mm or more was found to be 12% of the whole SPS.

COMPARATIVE EXAMPLE 6

The same procedure as in Example 9 was repeated except that agitation was performed with helical blades only without attaching scrapers, to obtain 1650 g of SPS. The total amount of scale and the particles having a diameter of 5 mm or more was found to be 70% of the whole SPS resulted.

COMPARATIVE EXAMPLE 7

The same procedure as in Example 9 was repeated except that agitating was effected with scrapers attached on the whole edge of the helical blades, to obtain 1700 g of SPS. The total amount of scale and particles having a diameter of 5 mm or more was found to be 65% of the whole SPS.

EXAMPLE 11

In a tank-type reactor of 10 liter in capacity, 200 mm in tank diameter, 340 mm in height, provided with lower agitating-blades of anchor paddle type tilted in the direction of scraping up with the blade diameter of 180 mm, blade width of 40 mm (the space between the paddle edge and the inner wall of the tank was 10 mm), and two agitating rods of 290 mm long from the upper edge of the lower agitating-blades, one of which is distant by 5 mm from the inner wall of tank, and the other is distant by 54 mm from the inner wall of the tank (both agitating rods are round ones with a diameter of 12 mm), and agitating rods having a connecting rod which connects the lower part of the rotation shaft, spaced by 140 mm from the upper edge of the tank, and the beforementioned both agitating rods (similarly, round rod of a diameter of 12 mm) (see Fig. 10), a polymerization reaction was performed under the same conditions as in Example 9. As the result, 1690 g of SPS was obtained. The syndiotacticity in terms of racemic pentad of said SPS was 96%. At the inspection of the inside of the tank, scale adhering to the inner wall of tank or agitating blades was found to be very little, and the total amount of said scale and the particles having a diameter of 5 mm or more was found to be 10% of the whole SPS.

EXAMPLE 12

The same procedure as in Example 11 was repeated except that agitating rods similar to the symmetrical positions to the axial shaft besides the agitating rods of agitating blades used in Example 11, and agitating blades provided with connecting rods of 12 mm square at the lower part of agitating rod (at the position of 80 mm up from the upper edge of lower agitating-blades), to obtain 1680 g of SPS. The syndiotacticity in terms of racemic pentad of said SPS was 96 %. And the total amount of the scale and the particles of a diameter of 5 mm or more was found to be 10% of the whole SPS.

COMPARATIVE EXAMPLE 8

The same procedure as in Example 11 was repeated except that agitation was performed with agitating blades having usual one-stair paddle (without scraper), to obtain 1650 g of SPS. The total amount of the scale and the particles having a diameter of 5 mm or more was found to be 75% of the whole SPS.

COMPARATIVE EXAMPLE 9

The same procedure as in Example 1 was repeated except that agitation was effected with agitation blades having usual double helical blades (the distance between the blade edge and the inner wall of the tank was 10 mm, without scrapers), to obtain 1700 g of SPS.

The total amount of the scale and the particles having a diameter of 5 mm or mode was found to be 70 % of the whole SPS resulted.

## Claims

**1.** A process for producing styrene-based polymers having mainly syndiotactic configuration which comprises bulk polymerizing styrene monomer or styrene derivative monomer at a temperature of up to 150 °C while adding a sufficient shearing force to the reaction mixture to keep the reaction mixture in a polydispersive state so as to make a substantially solid-state polydispersoid of the polymer.

**2.** The recess of Claim 1 wherein the polymerization is carried out at a temperature of 0 to 120 °C.

**3.** The process of Claim 1 or 2, wherein a shearing force of at least 0.005 kilowatt per liter of monomer is applied.

**4.** The process of Claim 3, wherein the shearing force is 0.01 to 1 kilowatt per liter of monomer.

**5.** The process of Claim 3, wherein the polymerization temperature is 0 to 120 °C.

**6.** The process of Claim 5, wherein the shearing force is 0.01 to 1 kilowatt per liter of monomer.

**7.** The process of any of claims 1 to 6 wherein a reaction apparatus is used for applying said shearing force, provided with agitating mechanism having agitating blades comprising: (a) double helical ribbon blades, (b) planetary-rotating blades, (c) rotary blades on one axis, or (d) rotary blades on two axis.

**8.** The process of any of claims 1 to 6 comprising applying said shearing force by agitating the mixture in a cylindrical reactor provided with rotatable agitating blades with two or more round rod paddles provided in the higher part of said reactor, two or more tilt flat-paddles provided in the lower part in said reactor, and scrapers attached to the paddles positioned higher than 1/4 of axial length of said reactor from its bottom, with their ends spaced by not more than 10 mm from the inner wall of said reactor, said scraper being set in shifted phases of rotation with vertically adjacent ones.

**9.** The process of any of claims 1 to 6 comprising applying said shearing force by agitating the mixture in a cylindrical reactor provided with agitating blades having helical blades, rotatably fitted in said reactor, and scrapers attached to the ends of said helical blades positioned higher than 1/4 of the axial length of the reactor from its bottom, the ends of said scrapers being spaced by not more than 10 mm from the inner wall of the reactor.

10. The process of any of claims 1 to 6 comprising applying the shearing force by agitating the mixture in a cylindrical reactor provided with rotatably fitted lower agitating-blades consisting of paddle blades or anchor blades in the lower part of the reactor, and at least two agitating rods extending in vertical direction at different distances from the rotary axis above the said lower agitating-blades.

**Patentansprüche**

1. Verfahren zur Herstellung von Polymeren auf Styrol-Basis mit hauptsächlich syndiotaktischer Konfiguration, das umfaßt die Polymerisation in Masse eines Styrol-Monomers oder Styrolderivat -Monomers bei einer Temperatur von bis zu 150°C bei gleichzeitiger Einwirkung einer ausreichenden Scherkraft auf die Reaktionsmischung, um die Reaktionsmischung in einem polydispersen Zustand zu halten, um so ein im wesentlichen im festen Zustand vorliegendes Polydispersoid des Polymers herzustellen.

2. Verfahren nach Anspruch 1, wobei die Polymerisation bei einer Temperatur von 0 bis 120°C durchgeführt wird.

3. Verfahren nach Anspruch 1 oder 2, wobei eine Scherkraft von mindestens 0,005 kW pro l Monomer angewendet wird.

4. Verfahren nach Anspruch 3, wobei die Scherkraft 0,01 bis 1 kW pro l Monomer beträgt.

5. Verfahren nach Anspruch 3, wobei die Polymerisationstemperatur 0 bis 120°C beträgt.

6. Verfahren nach Anspruch 5, wobei die Scherkraft 0,01 bis 1 kW pro l Monomer beträgt.

7. Verfahren nach einem der Ansprüche 1 bis 6, bei dem eine Reaktionsvorrichtung zum Einwirkenlassen der Scherkraft verwendet wird, die mit einem Rührmechanismus mit Rührschaufeln ausgestattet ist, der umfaßt: (a) Doppelhelix-Bandschaufeln, (b) Planeten-Rotationsschaufeln, (c) Rotationsschaufeln auf einer Achse oder (d) Rotationsschaufeln auf zwei Achsen.

8. Verfahren nach einem der Ansprüche 1 bis 6, das umfaßt die Anwendung einer Scherkraft durch Rühren der Mischung in einem zylindrischen Reaktor, der ausgestattet ist mit drehbaren Rührschaufeln mit zwei oder mehr runden stabpaddeln, die in dem höheren Teil des Reaktors vorgesehen sind, mit zwei oder mehr geneigten (schrägen) ebenen Paddeln, die in dem unteren Teil des Reaktors vorgesehen sind, und mit Schabern, die an den Paddeln befestigt sind, die oberhalb 1/4 der axialen Länge des Reaktors ab seinem Boden angeordnet sind, deren Enden einen Abstand von nicht mehr als 10 mm von der Innenwand des Reaktors haben, wobei die Schaber auf versetzte Rotationsphasen gegenüber den vertikal benachbarten Schabern eingestellt sind.

9. Verfahren nach einem der Ansprüche 1 bis 6, das umfaßt die Anwendung einer Scherkraft durch Rühren der Mischung in einem zylindrischen Reaktor, der ausgestattet ist mit Rührschaufeln mit Helix-Schaufeln, die drehbar in dem Reaktor befestigt sind, und Schabern, die an den Enden der Helix-Schaufeln befestigt sind, die oberhalb 1/4 der axialen Länge des Reaktors ab seinem Boden angeordnet sind, wobei die Enden dieser Schaber einen Abstand von nicht mehr als 10 mm von der Innenwand des Reaktors haben.

10. Verfahren nach einem der Ansprüche 1 bis 6, das umfaßt die Anwendung einer Scherkraft durch Rühren der Mischung in einem zylindrischen Reaktor, der ausgestattet ist mit drehbar befestigten unteren Rührschaufeln, die aus Paddelflügeln oder Ankerflügeln bestehen, im unteren Teil des Reaktors, und mindestens zwei Rührstäben, die sich in vertikaler Richtung in unterschiedlichen Abständen von der Rotationsachse oberhalb der genannten unteren Rührschaufeln erstrecken.

**Revendications**

1. Procédé de préparation de polymères à base de styrène ayant principalement une configuration syndiotactique qui comprend le polymérisation en masse de styrène monomère ou de dérivé du styrène monomère à une température jusqu'à 150°C tout en ajoutant une force de cisaillement suffisante au mélange de réaction pour conserver le mélange de réaction dans un état polydispersé

afin de fabriquer essentiellement une matière polydispersée de polymères à l'état solide.

**2.** Procédé selon la revendication 1, dans lequel la polymérisation est réalisée à une température de 0 à 120° C.

**3.** Procédé selon la revendication 1 ou 2, dans lequel une force de cisaillement d'au moins 0.005 kilowatt par litre de monomère est appliquée.

**4.** Procédé selon la revendication 3, dans lequel la force de cisaillement est de 0.01 à 1 kilowatt par litre de monomère.

**5.** Procédé selon la revendication 3, dans lequel la température de polymérisation est de 0 à 120° C.

**6.** Procédé selon la revendication 5, dans lequel la force de cisaillement est de 0.01 à 1 kilowatt par litre de monomère.

**7.** Procédé selon l'une quelconque des revendications 1 à 6, dans lequel on utilise un appareil de réaction pour appliquer ladite force de cisaillement, pourvu d'un mécanisme d'agitation ayant des pales d'agitation comprenant :
(a) des pales en ruban hélicoïdal double,
(b) des pales de rotation planétaire,
(c) des pales rotatives sur un axe, ou
(d) des pales rotatives sur deux axes.

**8.** Procédé selon l'une quelconque des revendications 1 à 6, comprenant l'application de ladite force de cisaillement par l'agitation du mélange dans un réacteur cylindrique pourvu de pales d'agitation qui peuvent tourner avec deux ailettes ou plus à tiges circulaires placées dans la partie supérieure dudit réacteur, deux ailettes ou plus plates inclinées placées dans la partie inférieure dudit réacteur, et des raclettes fixées aux ailettes placées au-dessus du 1/4 de la longueur axiale dudit réacteur à partir de son fond, avec leurs extrémités distantes de 10 mm au plus de la paroi interne dudit réacteur, ladite raclette étant décalée en phase lors de la rotation avec celle verticalement voisine.

**9.** Procédé selon l'une quelconque des revendications 1 à 6 comprenant l'application de ladite force de cisaillement par l'agitation du mélange dans un réacteur cylindrique pourvu de pales d'agitation ayant des pales hélicoïdales, placées dans ledit réacteur qui peuvent tourner, et des raclettes fixées aux extrémités desdites pales hélicoïdales placées au-dessus du 1/4 de la longueur axiale dudit réacteur a partir de son fond, les extrémités desdites raclettes étant espacées de 10 mm au plus de la paroi interne dudit réacteur.

**10.** Procédé selon l'une quelconque des revendications 1 à 6 comprenant l'application de la force de cisaillement en agitant le mélange dans un réacteur cylindrique pourvu de pales d'agitation inférieures, ajustées qui peuvent tourner, se composant de pales à ailettes ou de pales en forme d'ancre dans la partie inférieure du réacteur, et au moins deux tiges d'agitation s'étendant dans la direction verticale à des distances différentes de l'axe de rotation au-dessus desdites pales d'agitation inférieures.

Fig. 1

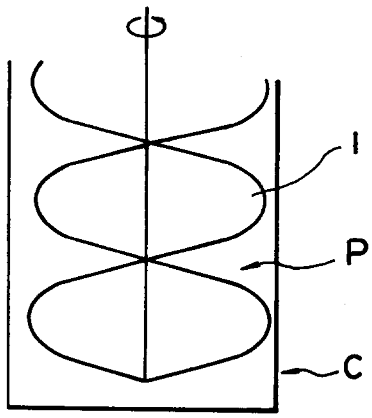


Fig. 2

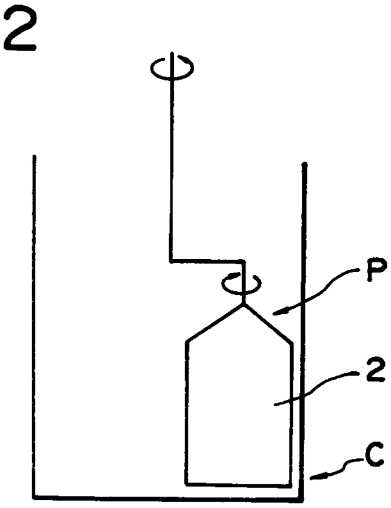


Fig. 3

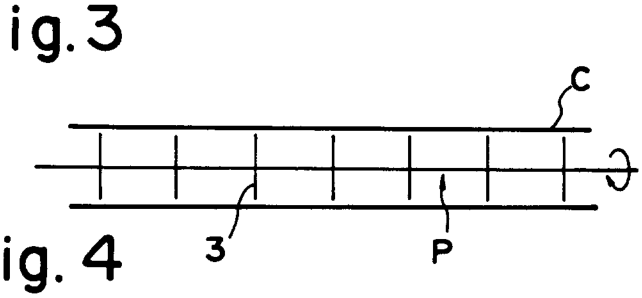


Fig. 4

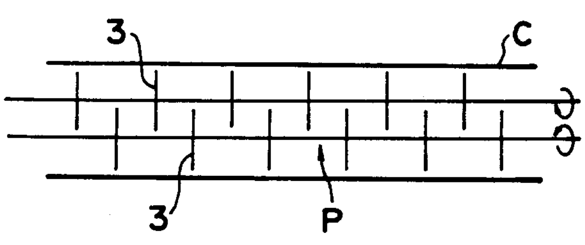

Fig. 5

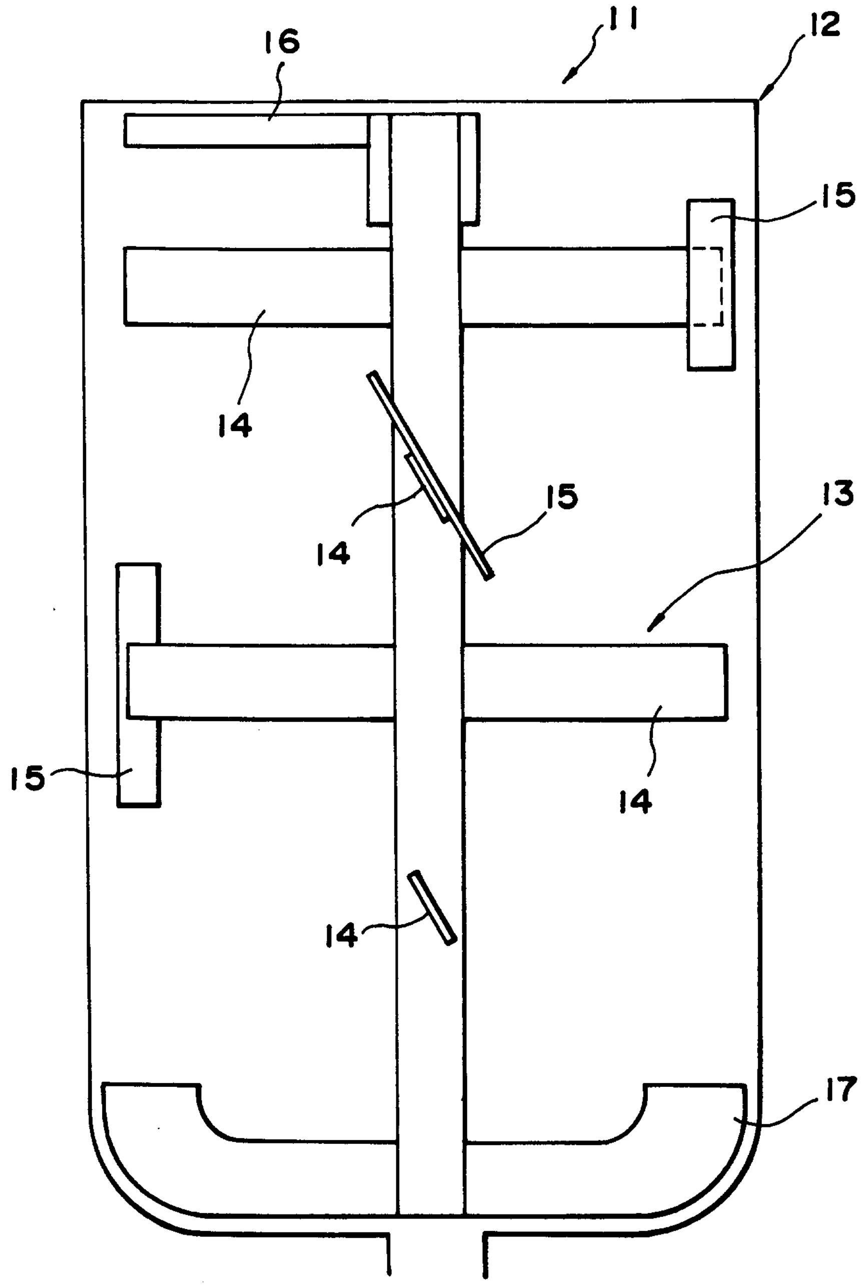

Fig. 6A

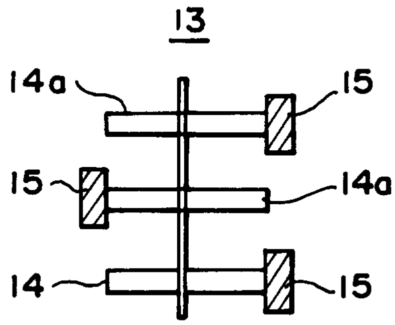


Fig. 6B

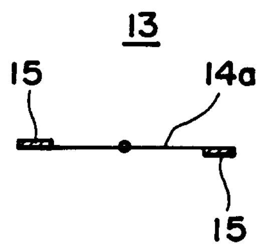


Fig. 7

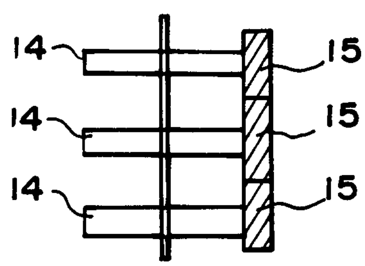

Fig. 8

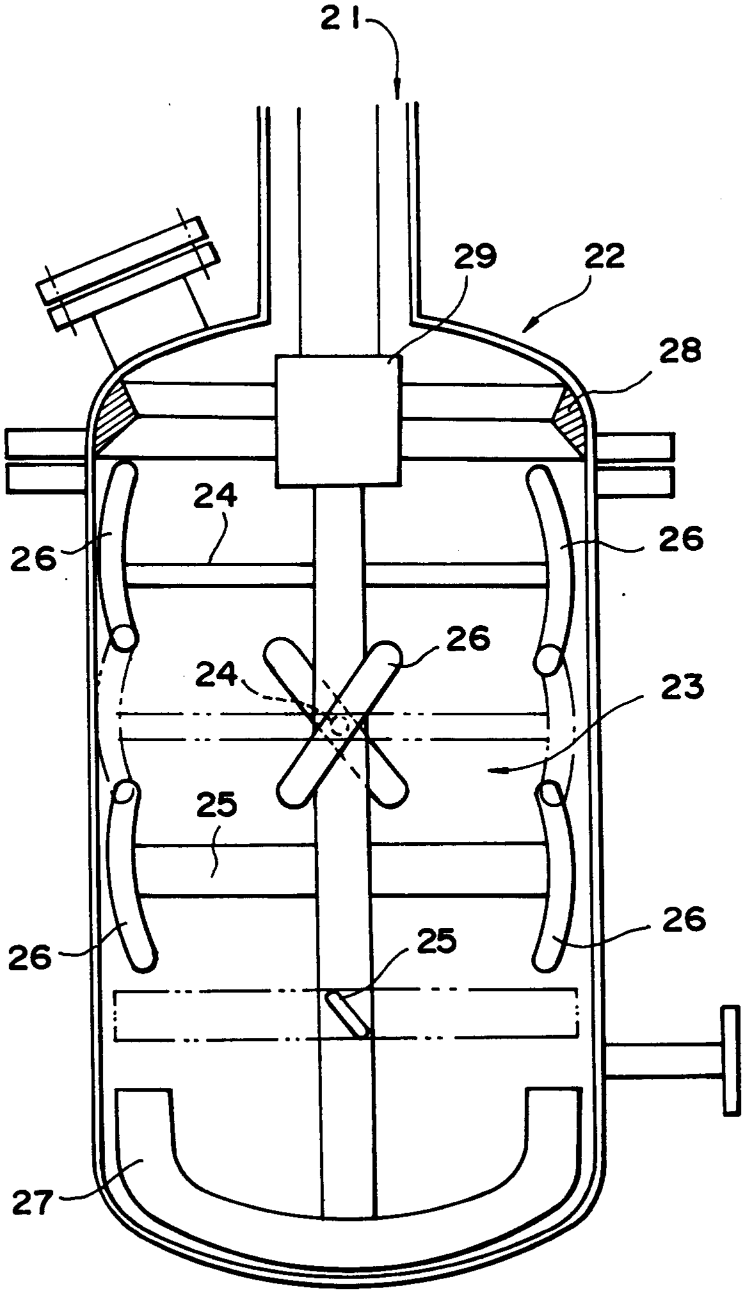

Fig. 9

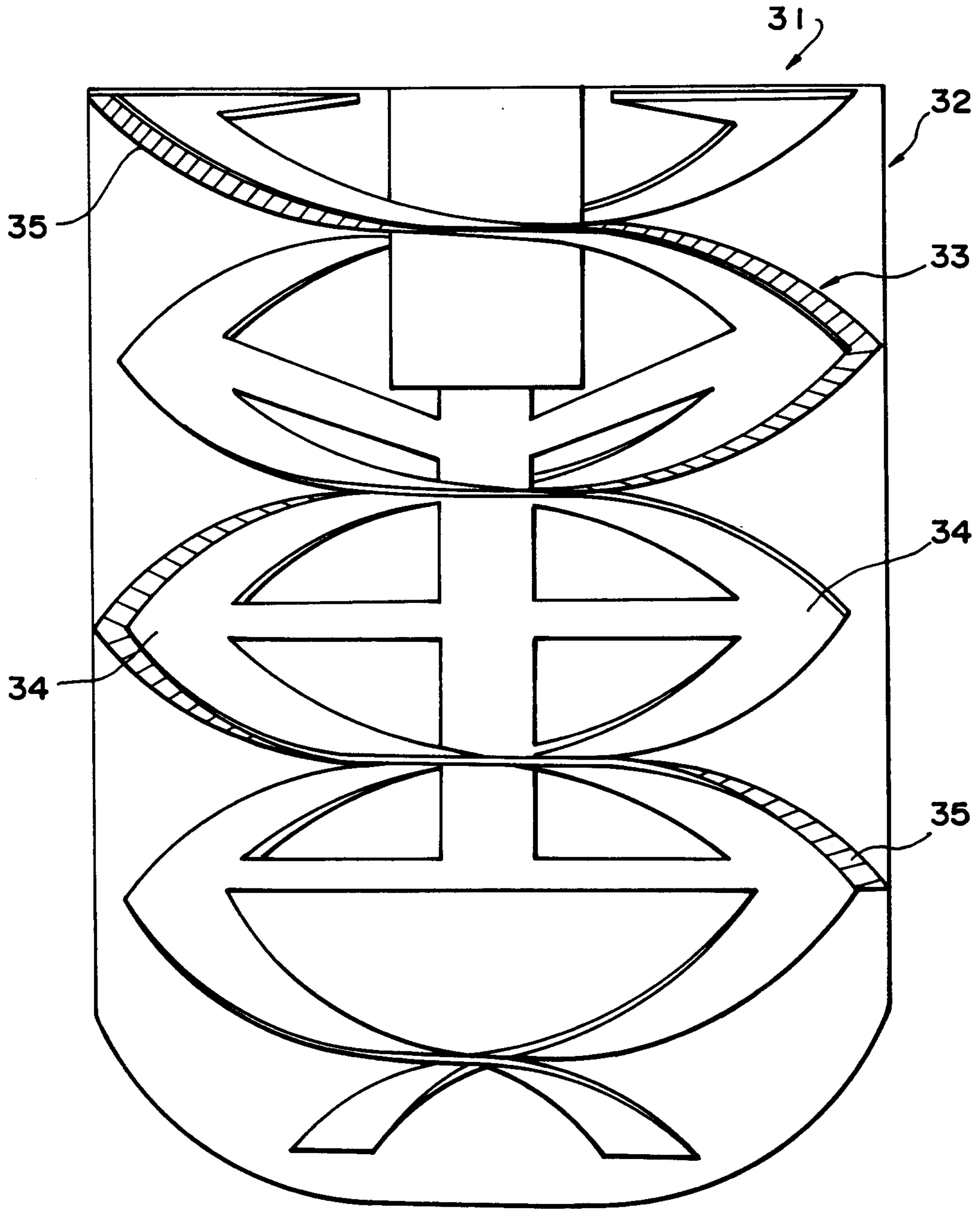

Fig. 10

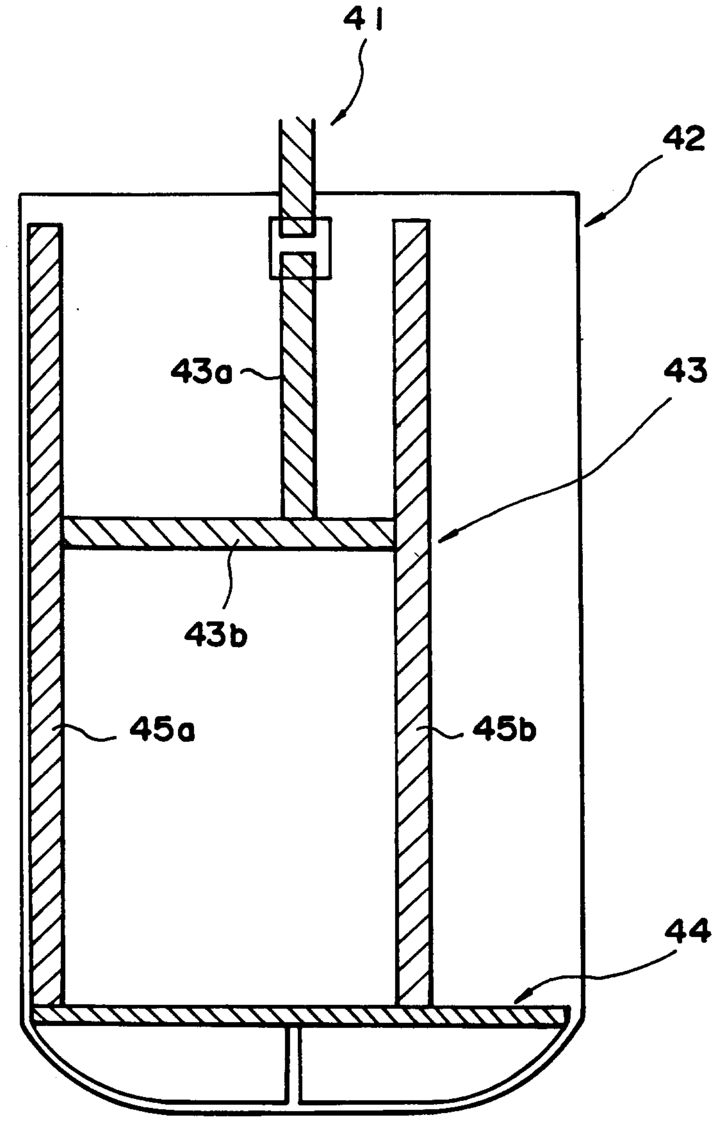

Fig. 11(A)

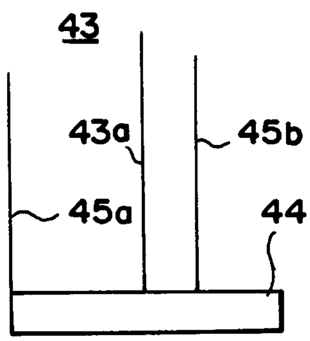


Fig. 11(B)

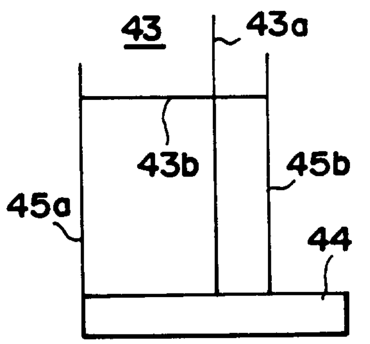


Fig. 11(C)

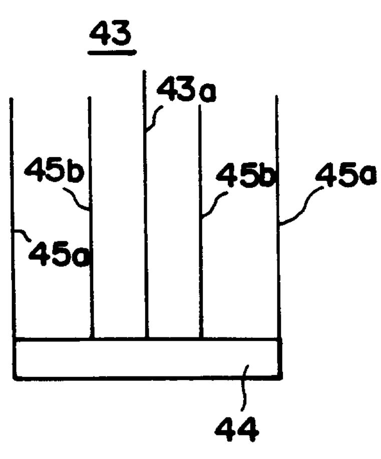


Fig. 11(D)

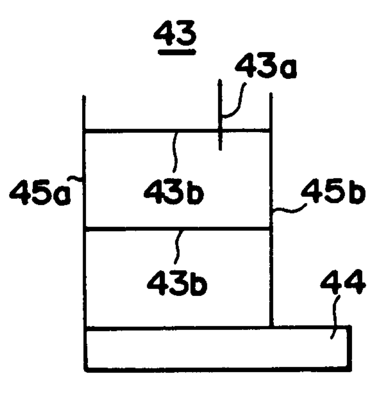

Fig.12